# EUROPÄISCHE PATENTSCHRIFT

(11) **EP 3 337 939 B1**
(45) Veröffentlichungstag und Bekanntmachung des Hinweises auf die Patenterteilung: **17.07.2019**
(21) Anmeldenummer: 16757148.8
(22) Anmeldetag: 27.07.2016
(51) Int. Cl.: E04G 3/30, B62D 55/065, B62D 55/075, B62D 55/14, B62D 55/26, B62D 57/024, B66B 9/00, B66B 9/187, F03D 80/50, E04G 3/28, E02B 17/00

(54) **BEFAHRANLAGE FÜR ZYLINDRISCHE UND/ODER KONISCHE OBERFLÄCHEN**
TRAVEL SYSTEM FOR CYLINDRICAL AND/OR CONICAL SURFACES
SYSTÈME DE DÉPLACEMENT POUR SURFACES CYLINDRIQUES ET/OU SURFACES CONIQUES

(30) Priorität: 21.08.2015 DE 102015010804
(43) Veröffentlichungstag der Anmeldung: 27.06.2018
(73) Patentinhaber: Fachhochschule Aachen, 52066 Aachen (DE)
(72) Erfinder: BAGHERI, Mohsen, 52072 Aachen (DE); SCHLEUPEN, Josef, 47906 Kempen (DE)
(74) Vertreter: Cohausz Hannig Borkowski Wißgott
(86) Internationale Anmeldenummer: PCT/EP2016/001297
(87) Internationale Veröffentlichungsnummer: WO 2017/032438

(56) Entgegenhaltungen:
- DE-C- 465 292
- ES-A1- 2 334 959
- JP-A- 2004 257 129
- SU-A1- 1 307 045
- US-A1- 2013 228 397

## Beschreibung

Die Erfindung betrifft eine Befahranlage für zylindrische und/oder konische Oberflächen, umfassend eine Montagebühne, eine Vielzahl von verbundenen Fahrwerken, bevorzugt identischen Fahrwerken, die in einer Umfangsrichtung, insbesondere zusammen mit der zwischen zwei Fahrwerken eingegliederten Montagebühne, einen geschlossenen Ring ausbilden, ein Spannsystem, das zumindest die Fahrwerke untereinander verbindet und mit dem der Abstand zwischen den verbundenen Fahrwerken änderbar ist, wenigstens ein weiteres Fahrwerk, das an der Montagebühne in einem axialen Abstand zum Ring der verbundenen Fahrwerke angeordnet ist, wobei zumindest die zum Ring verbundenen Fahrwerke, bevorzugt auch das dazu axial beabstandete Fahrwerk jeweils als Kettenfahrwerk ausgebildet sind.

Eine solche Befahranlage ist beispielsweise aus US 2013/228397 A1 bekannt.

Zu befahrende Oberflächen können z.B. durch die Außenfläche eines sich ggfs. verjüngenden Rohres oder Mastes ausgebildet sein. Die Befahranlage soll auch geeignet sein, das Rohrinnere, also die Innenfläche eines Rohres zu befahren oder die Innenfläche eines Mastes.

Das Befahren solcher Oberflächen zylindrischer, ggfs. sich konisch verjüngender Gestalt wird in vielen Anwendungsgebieten benötigt. Z.B. müssen zu Wartungsarbeiten rohrförmige, z.B. horizontal liegende Pipelines befahren werden. Gleiches gilt für vertikal Rohre oder Masten, wie z.B. solche von Windkraftanlage. Neben der Wartung dient eine Befahranlage auch zur Montage von Rotorblättern solcher Anlagen.

Im Stand der Technik sind Befahranlagen bekannt, die z.B. mittels Seilzuges entlang der Längserstreckung der zu befahrenden Oberfläche, z.B. eines Mastes gezogen werden. Solche Befahranlagen stützen sich nur an der Oberfläche ab und rollen an dieser passiv entlang. Die Haltekräfte werden im Wesentlichen durch den Seilzug aufgebracht.

Weiterhin sind Befahranlagen bekannt, die selbsttätig z.B. einen Mast in Höhenrichtung erklimmen können. Hierbei handelt es sich um schreitende Antriebe. Die Haltekräfte müssen hierbei von Mast / Rohr aufgebracht und werden häufig nun sehr punktuell in die Oberfläche eingeleitet, was Schäden verursachen kann, besonders wenn von zwei abwechselnd klemmend befestigten Schreitantrieben einer zum Zweck der Verschiebung entlang der Schreitrichtung gelöst ist.

Es ist daher die Aufgabe der Erfindung eine Befahranlage bereit zu stellen, die durch eigene Antriebskraft entlang einer zylindrischen oder konischen Oberfläche, wie der eines Rohres oder Mastes entlangfahren kann, insbesondere in Höhenrichtung und mit der die Haltekräfte auf eine möglich große Fläche sowohl örtlich als auch zeitlich verteilt sind. Ein Befahren sowohl der äußeren als auch der inneren Oberfläche eines Rohres soll in besonders bevorzugter Ausführung ermöglicht werden.

Diese Aufgabe wird durch eine Befahranlage der eingangs genannten Art gelöst, bei der das Spannsystem in Umfangsrichtung in mehrere Spannsystemabschnitte unterteilt ist und jeder Spannsystemabschnitt zwei in Umfangsrichtung beabstandete Fahrwerke verbindet und in der Umfangsrichtung mittels wenigstens eines Aktors längenänderbar ist und ein jeder Spannsystemabschnitt als Scherengelenkkette oder Scherengelenkgitter ausgebildet ist, insbesondere nach Art einer Nürnberger Schere, mit ein- und/oder mehrfach gekreuzten Scherenhebeln, die im Kreuzungsbereich gelenkig verbunden sind.

Richtungsangaben, wie z.B. "axial" oder "radial" sind in der vorliegenden Beschreibung in Bezug auf den gebildeten Ring von Fahrwerken zu verstehen, der ein Rohr oder einen Mast umgibt. Die axiale Richtung ist somit übereinstimmend mit der Längserstreckungsrichtung des befahrenen Rohres / Mastes und die radiale senkrecht dazu.

Zumindest die zu einem Ring verbundenen Kettenfahrwerke sind angetrieben, so dass mittels diesen das selbsttätige Entlangfahren der Befahranlage an der Oberfläche ermöglicht wird. Durch die Verwendung von Kettenfahrwerken wird dabei der Vorteil erschlossen, dass die Kräfte auf die Oberfläche nicht nur punktuell, sondern entlang einer Linie, bevorzugt entlang einer in Fahrtrichtung längserstrecken Kontaktfläche zwischen den Laufflächen des jeweiligen Kettenfahrwerkes und der Oberfläche übertragen werden. Um eine möglichst große Kontaktfläche zu erzielen können die Laufflächenelemente eines Kettenfahrwerkes z.B. aus einem Elastomer ausgebildet sein, das sich an die Oberflächenkrümmung anpasst.

Vorzugsweise ist auch das wenigstens eine zu dem zum Ring verbundenen Fahrwerken axial beabstandete Fahrwerk angetrieben. So wird auch die Antriebskraft auf möglichst viele Fahrwerke verteilt.

Durch die Ausbildung der Fahrwerke als Kettenfahrwerk wird auch ein kontinuierliches Entlangfahren entlang der Oberfläche sichergestellt, so dass die über die Fahrwerke in die Oberfläche eingeleiteten Kräfte auch über die Zeit gleichmäßig verteilt sind, was z.B. bei Schreitantrieben nicht der Fall ist, da zeitweise wenigstens einer der schreitenden Antrieb von der Oberfläche gelöst ist und die Kräfte von dem oder den verbleibenden übertragen werden. Hierdurch ergibt sich eine zeitliche Ungleichverteilung der Kräfte.

Bei einer in Höhenrichtung fahrenden Befahranlage dieser Art kann zusätzlich zu den zu einem Ring verbundenen Fahrwerken nur noch ein dazu axial beabstandetes Fahrwerk vorgesehen sein, das bei Anordnung der Befahranlage an einem Mast unterhalb der zum Ring verbundenen Fahrwerke angeordnet ist und die gesamte Befahranlage gegen ein Verkippen um eine Horizontalachse sichernd an der Oberfläche abstützt.

Bei horizontal fahrenden Befahranlagen dieser Art kann es auch vorgesehen sein, in Fahrtrichtung jeweils vor und hinter den zum Ring verbunden Fahrwerken wenigstens ein weiteres axial beabstandetes Fahrwerk in Kontakt zur Oberfläche anzuordnen, um ein Kippen der Befahranlage um eine Horizontalachse sowohl in als auch entgegen der Fahrtrichtung zu verhindern.

Diese außerhalb des Ringes angeordneten weiteren Fahrwerke werden lediglich lose auf der Oberfläche geführt.

Die zu einem Ring insbesondere unter Einschluss der Montagebühne verbundenen Fahrwerke hingegen werden durch das verbindende Spannsystem mit einer Kraft in Richtung zur Oberfläche beaufschlagt, so dass sich die Befahranlage durch diese aufgebrachten Kräfte selbst an der Oberfläche, die sie mit dem Ring umschließt, festhält.

Die Erfindung sieht es vor, dass das Spannsystem in Umfangsrichtung in mehrere Spannsystemabschnitte unterteilt ist und jeder Spannsystemabschnitt zwei in Umfangsrichtung beabstandete Fahrwerke verbindet und in der Umfangsrichtung mittels wenigstens eines Aktors längenänderbar ist. Hierdurch wird die insgesamt aufzubringende Spannkraft auf mehrere Aktoren verteilt.

Dabei ist weiterhin vorgesehen, dass ein jeder Spannsystemabschnitt als Scherengelenkkette oder Scherengelenkgitter ausgebildet ist, insbesondere nach Art einer Nürnberger Schere mit ein- und/oder mehrfach gekreuzten Scherenhebeln, die im Kreuzungsbereich gelenkig verbunden sind.

Eine solche Scherengelenkanordnung hat den Vorteil, nicht nur in Umfangsrichtung längenänderbar zu sein, sondern auch in Fahrtrichtung auftretenden Kräfte, besonders bei in Höhenrichtung fahrenden Befahranlagen in den Ringverbund umzuleiten.

Eine besonders stabile Konstruktion ergibt sich, wenn ein jeder Spannsystemabschnitt in radialer Richtung (bezogen auf den gebildeten Ring) wenigstens zwei beabstandet nebeneinander liegende Scherengelenkketten oder Scherengelenkgitter aufweist. Bei dieser Anordnung sind die Gelenkpunkte der sich kreuzenden Scherenhebel bei den in radialer Richtung nebeneinander liegenden Scherenhebeln mit einer Achse (Welle) verbunden.

Durch einen jeweils in Umfangsrichtung oder senkrecht dazu liegenden Linearantrieb, der sich beidseitig an Kreuzungsbereichen bzw. Gelenkachsen abstützt kann eine Längenänderung eines solchen Spannsystemabschnittes erfolgen. Bevorzugt können hier alle Antriebe gleichzeitig angesteuert werden um immer die Längen aller Spannsystemabschnitte gleichzeitig zu ändern.

Bei einem an einer äußere Oberfläche fahrenden Befahranlage werden die Fahrwerke radial innenliegend bezogen auf die Spannsystemabschnitte angeordnet sein, so dass das Spannsystem selbst von den Fahrwerken auf Abstand zur befahrenen Oberfläche gehalten wird.

Um an inneren Oberflächen eines Rohres entlangzufahren kann die Erfindung auch vorsehen, dass die Fahrwerke radial außenliegend zum Spannsystem angeordnet sind. Das Spannsystem, bzw. die einzelnen Spannsystemabschnitte kann so die Fahrwerke radial nach außen in Richtung zur Innenfläche eines Rohres drücken. Besonders diese Ausführung ist vorteilhaft mit Scherengelenkketten oder -gittern auszubilden, da hiermit sowohl radial nach innen als auch nach außen weisende Kräfte erzeugbar sind.

Die Erfindung kann in vorteilhafter Weiterbildung vorsehen, dass ein jeder Spannsystemabschnitt an seinen in Umfangsrichtung liegenden Enden wenigstens einen Verbinder, bevorzugt axial beabstandete Verbinder aufweist, an welche jeweils ein Trägerelement eines jeweiligen Fahrwerkes in zwei verschiedenen um 180 Grad rotierte axial ausgerichtete Orientierungen montierbar ist, insbesondere in einer ersten Orientierung, in welcher ein jeweiliges Fahrwerk bezogen auf das Spannsystem radial nach innen steht und eine zweite Orientierung in welcher ein jeweiliges Fahrwerk bezogen auf das Spannsystem radial nach außen steht. Auf diese Weise kann dieselbe Befahranlage je nach gewählter Orientierung sowohl äußere als auch innere Oberflächen wahlweise befahren. Die axial beabstandeten Verbinder können z.B. an den in Umfangsrichtung liegenden Enden von Scherenhebeln angeordnet sein.

Die Erfindung kann weiterhin bevorzugt vorsehen, dass ein Kettenfahrwerk, insbesondere jedes Kettenfahrwerk wenigstens einen Kettenlaufwagen umfasst. Besonders bevorzugt ist es jedoch vorgesehen, dass ein jedes Kettenfahrwerk jeweils ein Paar von 2-strängigen Kettenlaufwagen umfasst.

Unter einem Kettenlaufwagen wird dabei eine Anordnung verstanden, bei welchem wenigstens eine Kette zwischen zwei Umlenk-Rädern, insbesondere Umlenk-Zahnrädern umläuft, wobei die Räder in Fahrtrichtung des Kettenlaufwagens beabstandet sind und wenigstens ein Rad, bevorzugt das in Fahrtrichtung vordere Umlenkrad angetrieben ist. Zwischen den Umlenk-Rädern können weitere Räder angeordnet sein oder die wenigstens eine Kette wird im Bereich zwischen den Umlenkrädern in oder über Schienen geführt. Diese letzte Konstruktion ist bei der Erfindung bevorzugt um eine gleichmäßige Anlage der von einer Kette geführten Laufflächenelemente an der befahrenen Oberfläche zu gewährleisten.

Bei einem 2-strängigen Kettenlaufwagen sind zwei Ketten parallel nebeneinander angeordnet, wobei die Umlenkräder colineare oder gemeinsame Achsen haben, die angetriebenen Umlenkräder jedoch gemeinsam oder unabhängig voneinander angetrieben sein können.

Bei einem solchen Kettenlaufwagen weisen die einzelnen Kettenglieder Laufflächenelemente auf, die fest oder auch auswechselbar mit den Kettengliedern verbunden sein können.

Bevorzugt ist hier eine Ausführung bei welcher die Kettenglieder jedes Kettenlaufwagens Laufflächenelemente aufweisen, welche mit einer Oberfläche reibschlüssig zusammenwirken, was z.B. durch eine Ausbildung einer jeweiligen Lauffläche aus einem Elastomer realisiert werden kann. Hierdurch kann sich die Laufflächenoberfläche, die zur befahrenen Oberfläche weist, an diese anpassen. Es kann jedoch auch eine Ausführung vorgesehen sein, bei welcher die Lauflächenelement mit der befahrenen Oberfläche formschlüssig zusammenwirken, insbesondere durch Ausbildung einer jeweiligen Lauffläche mit einer Oberflächenstrukturierung korrespondierend zu einer Oberflächenstrukturierung an der entlangzufahrenden Oberfläche. Kettenlaufwerke der genannten Art haben den Nachteil, dass das Fahren senkrecht zur Richtung, in welcher die Umlenkräder beabstandet sind, unmöglich ist. So können Befahranlagen der genannten Art mit Kettenfahrwerken nach dem bislang bekannten Stand der Technik solche Fahrmanöver nicht durchführen. Befahranlagen der beschrieben Art können also nicht in einer axialen Position auf dem befahrenen Rohr in Umfangsrichtung um dieses herumfahren. Die Erfindung soll durch Weiterbildung der bekannten Kettenlaufwerke eine solche Möglichkeit erschließen.

Die Laufflächenelemente eines Kettenlaufwerkes einer erfindungsgemäßen Befahranlage können hierfür in einer ersten Ausführung Rollen umfassen, insbesondere von denen wenigstens eine antreibbar und/oder bremsbar ist, deren Rotationsachsen in Fahrtrichtung des Kettenlaufwagen ausgerichtet sind. Durch diese Ausbildung kann eine Befahranlage durch Ansteuerung des oder der Antriebe der Kettenlaufwagen z.B. an einem Mast hochfahren oder an einem Rohr entlangfahren und durch Ansteuerung der Rollen in den Laufflächenelementen, insbesondere nur in denjenigen Laufflächenelementen, die aktuell die befahrene Oberfläche berühren, in Umfangsrichtung um den Mast oder das Rohr rotiert werden. Solche Rollen können auch durch ein umlaufendes Band überdeckt sein. Bei normaler Fahrt können z.B. die Rollen gebremst werden.

Eine andere Ausbildung zur Realisierung einer Bewegung der Befahranlage in Umfangsrichtung senkrecht zur Hauptfahrtrichtung kann vorsehen, dass die Kettenglieder jedes Kettenlaufwagens Laufflächenelemente aufweisen, welche relativ zum jeweiligen Kettenglied versetzbar sind.

Unter einer solchen Versetzbarkeit kann z.B. verstanden werden, dass mittels einer Aktorik (aus z.B. mehreren Aktoren), die zwischen Kettenglied und Laufflächenelement angeordnet ist, ein jeweiliges Laufflächenelement von der Oberfläche abgehoben, lateral, bevorzugt senkrecht zur Fahrtrichtung (Abstandsrichtung der Umlenkräder) verschoben und wieder auf die Oberfläche abgesetzt wird. Durch diese Versetzung, die z.B. aufeinanderfolgend bei verschiedenen Laufflächenelementen erfolgen kann, kann ein schreitendes Bewegen der Kettenfahrwerke und somit der gesamten Befahranlage in Umfangsrichtung realisiert werden.

Zwischen Kettenglied und Laufflächenelement können sich z.B. ansteuerbare Linearantriebe erstecken, bevorzugt wenigstens drei und besonders bevorzugt vier Linearantriebe, z.B. von denen jeweils zwei ein Paar bilden und in einem Winkel zueinander angeordnet sind und die zwei Paare parallel zueinander angeordnet sind.

Die Linearantriebe, alle oder zumindest jeweils zwei eines genannten Paares, können an der Seite zum Kettenglied eng aneinander liegende Anlenkstellen haben und an der Seite zum Laufflächenelement weiter auseinander liegende Anlenkstellen. Die Begriffe "eng" und "weiter auseinander" sind dabei in Relation zueinander zu verstehen. Die durch die Linearantriebe bewegbaren Laufflächenelemente können mittels wenigstens eines Führungsgetriebes bevorzugt zwei gleich aufgebauten Führungsgetrieben, das/die sich zwischen Kettenglied und jeweiligen Laufflächenelement erstreckt/erstrecken, in Ihrem Bewegungsweg zwangsgeführt sein.

Die Linearantriebe können so angesteuert werden, dass sich durch Überlagerung von deren Bewegungen die zuvor genannte Versetzung ergibt, d.h. das Abheben, laterale Verschieben und Absenken eines jeweiligen Laufflächenelementes. Auch hier ist es nur nötig, dass die Aktoren nur von solchen Laufflächenelementen zum Ausführen der Versetzung angesteuert werden, die zur befahrenen Oberfläche weisen, bzw. diese kontaktieren oder die sich gerade im Umlauf um ein Umlenkkrad, insbesondere das vordere befinden. Die anderen Laufflächen bleiben bzgl. der Versetzung unangesteuert.

Die Erfindung kann auch vorsehen, dass die genannten, eine Versetzung bewirkenden Aktoren angesteuert werden, während ein Kettenlaufwerk durch den Kettenumlauf in Fahrtrichtung angetrieben ist.

Eine Versetzung kann auch in dem Sinne verstanden werden, dass ein Laufflächenelement relativ zum Kettenglied linear verschiebbar ist, insbesondere senkrecht zur Richtung, in welcher die Umlenkräder beabstandet sind, insbesondere ohne den Abstand zum Kettenglied zu ändern. Ein Laufflächenelement kann dafür z.B. über wenigstens eine Linearführung mit dem Kettenglied verbunden sein, wobei die Verschiebung in der Linearführung motorisch angesteuert erfolgen kann.

Eine bevorzugte Ausbildung der Kettenfahrwerke bei der Anwendung für erfindungsgemäße Befahranlagen kann weiterhin vorsehen, dass ein jeweiliges Kettenfahrwerk ein mit Spannsystemabschnitten verbindbares Trägerelement aufweist und der wenigstens eine Kettenlaufwagen um eine radiale, bevorzugt antreibbare Drehachse beweglich am Trägerelement befestigt ist. Bevorzugt sieht die Erfindung jedoch vor, dass ein Paar von 2-strängigen Kettenlaufwagen (also zwei 2-strängige Kettenlaufwagen) zu zwei Seiten um die radiale, bevorzugt antreibbare Drehachse herum angeordnet und über diese gemeinsam am Trägerelement befestigt ist. Die radiale Drehachse kann so z.B. in einer betrachteten Richtung mittig zwischen den zwei 2-strängigen Kettenlaufwerken des genannten Paares liegen. Somit weist ein Kettenfahrwerk insgesamt 4 Ketten auf, von denen jeweils zwei in einem 2-strängigen Kettenlaufwagen vorgesehen sind, welche bevorzugt symmetrisch um die radiale Drehachse herum angeordnet sind.

Durch Antrieb der radial ausgerichteten Drehachse mittels eines Aktors kann die Fahrtrichtung des Kettenlaufwagens, bevorzugt beider 2-strängigen Kettenlaufwagen abweichend von der Erstreckungsrichtung des zu befahrenden Rohres / Mastes gewählt werden, so dass eine Fahrbewegung entlang der Erstreckung mit einer Fahrbewegung in Umfangsrichtung überlagert werden kann. Hierdurch kann die Befahranlage z.B. schraubenförmig um einen Mast oder um ein Rohr herumfahren.

In einer Weiterbildung, die bevorzugt mit der vorherigen Ausführung kombinierbar ist, kann jeder der beiden 2-strängigen Kettenlaufwagen um eine eigene in Fahrtrichtung liegende, bevorzugt antreibbare Achse, insbesondere die zwischen den zwei Kettensträngen angeordnet ist, senkrecht zur radialen Drehachse verschwenkbar sein, insbesondere wobei die beiden Achsen parallel liegen. Eine solche Ausführung hilft, dass sich die Kettenlaufwagen, insbesondere die bevorzugt planen Oberflächen der Laufflächenelemente tangential an die Umfangskrümmung eines Rohres / Mastes anlegen können.

Auch kann die Erfindung vorsehen, dass wenigstens einer der beiden 2-strängigen Kettenlaufwagen des Kettenfahrwerkes einer Befahranlage um eine Achse senkrecht zur Laufrichtung (Abstandsrichtung der Umlenkräder) und senkrecht zur radialen Drehachse drehbar an einem Träger gelagert ist, insbesondere an welchem auch der andere 2-strängige Kettenlaufwagen befestigt ist. Auch diese Drehachse kann in einer Ausführung motorisch ansteuerbar sein, um eine Drehung zu bewirken, insbesondere des einen 2-strängigen Kettenlaufwagens relativ zum anderen.

Eine Montagebühne einer erfindungsgemäßen Befahranlage kann einen ersten Träger aufweisen, der in seiner Längserstreckungsrichtung in den Ring der verbundenen Fahrwerke eingegliedert ist. Hierzu kann z.B. an den beiden Trägerenden jeweils ein Fahrwerk bevorzugt gelenkig (senkrecht zur Trägererstreckung) angeordnet sein. An diese beidseitig ersten Fahrwerke schließen sich sodann über die Spannsystemabschnitte weitere Fahrwerke an.

Der gebildete Ring ist bevorzugt zu öffnen, um die Fahrwerke mit den Spannsystemabschnitten um ein Rohr oder Mast herumlegen zu können. Hiernach wird der Ring geschlossen. Der erste Träger der Montagebühne ist somit in Umfangsrichtung orientiert. Dieser Träger kann eine geradlinige Erstreckung haben aber auch eine Krümmung die an einen Krümmungsbereich angepasst ist, der mit der Befahranlage gefahren werden kann.

Senkrecht zur Erstreckung des ersten Trägers kann ein zweiter Träger angeordnet sein, der das wenigstens eine weitere Fahrwerk trägt. Erster und zweiter Träger können die geometrische Konfiguration eines T annehmen.

An einer Montagebühne können beliebige weitere Aufbauten, z.B. für Wartungszwecke befestigt werden, z.B. eine Wartungshalle.

Auch kann die Erfindung in einer Ausführung vorsehen, dass jeder als Scherengelenkketten oder Scherengelenkgitter ausgebildeter Spannsystemabschnitt bezogen auf eine Montage an einem vertikalen Mast/Rohr an den obenliegenden Gelenkachsen der Scherenhebel Rollen aufweist auf denen eine Arbeitsbühne, insbesondere mit planer Unterfläche, in Umfangsrichtung um den Mast / das Rohr herumrollbar ist.

Erfindungsgemäß können auch zwei der vorbeschriebenen Befahranlagen an ihren Montagebühnen verbunden werden. So kann eine erste der beiden Befahranlage verwendet werden um an einem stationären Rohr / Mast entlangzufahren und die zweite Befahranlage kann verwendet werden um ein mobiles Rohr- oder Maststück hiermit zu halten und relativ zur ersten Befahranlage zu bewegen. Die Verbindung der beiden Montagebühnen erfolgt bevorzugt drehbeweglich.

Ausführungsformen der Erfindung werden anhand der Figuren beschrieben.

Die Figuren beschreiben die Anwendung der erfindungsgemäßen Befahranlage im Bereich von Windkraftanlage. Die nachfolgend beschriebenen Merkmale geltend jedoch auch anwendungsübergreifend, d.h. für jede Art der möglichen Anwendung.

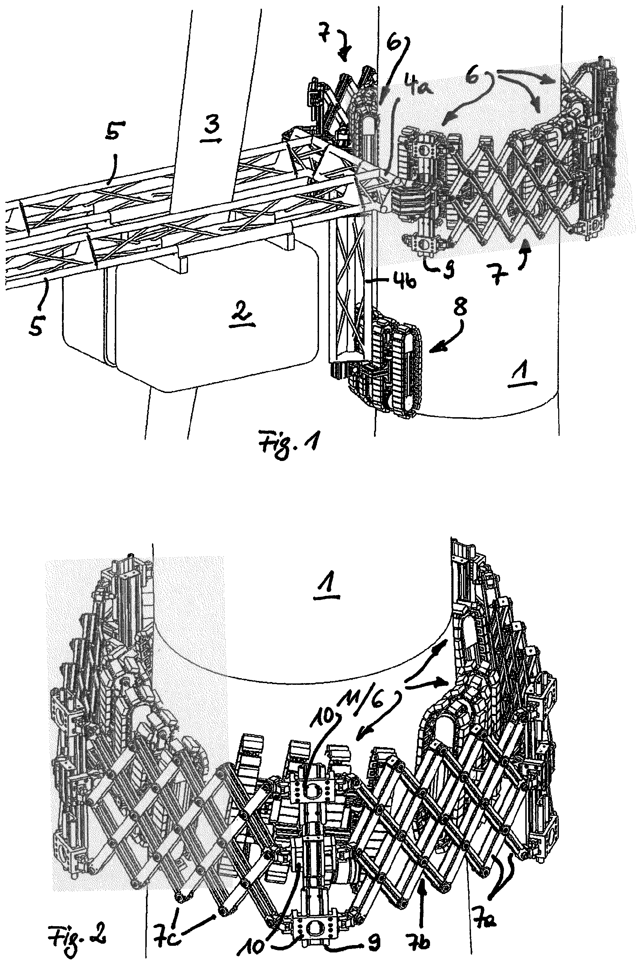

Figur 1 zeigt einen Abschnitt eines rohrförmigen Mastes 1 einer Windkraftanlage, der sich nach oben konisch verjüngt. An dem Mast 1 ist eine erfindungsgemäße Befahranlage befestigt, mit welcher hier eine Wartungshalle 2 getragen wird, um ein Rotorblatt 3 zu warten.

Die Befahranlage umfasst eine Montagebühne 4 mit einem hier etwa horizontal liegenden ersten Träger 4a und einen senkrecht dazu, d.h. vertikal angeordneten zweiten Träger 4b. Beide Träger bilden die Konfiguration eines "T".

Hieran sind weitere Träger 5 befestigt, um die Wartungshalle 2 zu tragen. Diese Elemente bilden keinen wesentlichen Teil der Erfindung.

Rechts- und linksseitig des ersten Trägers 4a sind an dessen Enden erste Kettenfahrwerke 6 angeordnet, von denen sich in Umfangsrichtung des Mastes Spannsystemabschnitte 7 erstrecken, die diese ersten Kettenfahrwerke 6 mit weiteren in Umfangsrichtung liegenden Kettenfahrwerken 6 verbinden.

Die Kettenfahrwerke sind hier jeweils aus zwei 2-strängigen Kettenlaufwerken aufgebaut, die radial innen zu den Spannsystemabschnitten 7 angeordnet sind. Durch Längenänderung, hier Verkürzung der Spannsystemabschnitte 7 wird der Abstand zwischen den Kettenfahrwerken 6 verringert und somit der Durchmesser bzw. Umfang des durch die verbundenen Kettenfahrwerke gebildeten Ringes verkleinert. Die Laufflächen der Kettenfahrwerke werden hierdurch reibschlüssig an die Mastoberfläche gepresst, wodurch die Befahranlage reibschlüssig festgehalten wird.

In einem axialen (relativ zum Mast / Ring) Abstand zu den verbundenen Kettenfahrwerken 6 ist am unteren Ende des zweiten Trägers 4b ein weiteres Kettenfahrwerk 8 angeordnet, dass im Aufbau zu den Kettenfahrwerken 6 identisch sein kann, die bevorzugt ihrerseits alle identisch sind.

Ein Kippmoment um eine Horizontalachse kann somit durch dieses weitere Kettenfahrwerk 8 abgefangen werden.

Die Figur 2 zeigt die Ausbildung des Ringes der verbundenen Kettenfahrwerke 6 auf der von der Montagebühne abgewandten Seite des Mastes 1. Hier ist erkennbar, dass ein jedes Kettenfahrwerk 6 ein Trägerelement 9 aufweist, dass parallel zur Längserstreckungsrichtung des Mastes liegt bzw. senkrecht zur durch den Ring aufgespannten Ebene.

Dieses Trägerelement 9 der Kettenfahrwerke 6 ist mittels Verbindern 10 an den in Umfangsrichtung liegenden Enden der Spannsystemabschnitte 7 befestigt, bevorzugt lösbar.

Die Spannsystemabschnitte 7 sind jeweils ausgebildet als Scherengelenkgitter nach der Bauart einer sogenannten Nürnberger Schere, mit sich mehrfach kreuzenden Scherenhebeln 7a, die an den jeweiligen Kreuzungsbereichen 7b und den jeweiligen Enden 7c gelenkig verbunden sind. Durch zwischen den Kreuzungsbereichen und hier nicht dargestellte Linearantriebe kann die Länge in Umfangsrichtung jedes Scherengetriebegitters oder Scherengelenknetzes geändert werden. Das jeweilige Scherengelenkgitter eines Spannsystemabschnittes 7 ist in radialer Richtung doppelt ausgeführt.

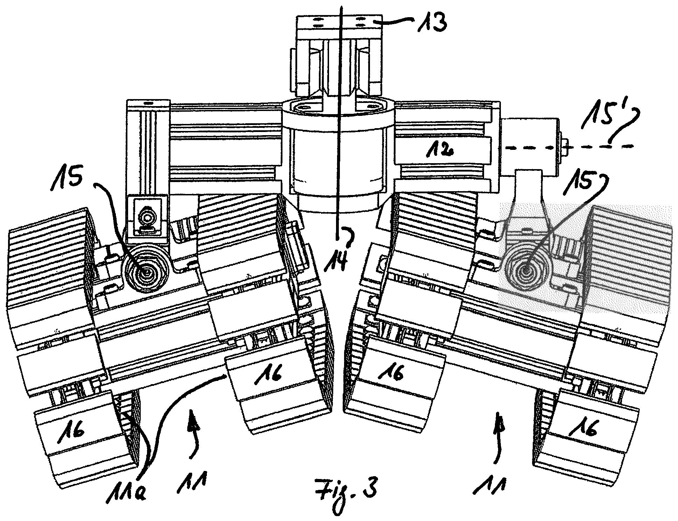

Radial innenliegend zum Scherengelenkgitter 7 sind hier die Kettenlaufwagen 11 der Kettenfahrwerke 6 angeordnet. Diese Kettenlaufwagen sind in der Figur 3 im Detail dargestellt.

Diese Figur 3 zeigt eine Dreh-Befestigung der Kettenlaufwagen 11 über einen gemeinsamen Träger 12 an einem Befestigungsflansch 13 des hier nicht gezeigten Trägerelementes 9. Die Befestigung ist derart, dass die Kettenlaufwagen 11 um eine in radialer Richtung weisende Drehachse 14 drehbar ist. In der Befestigung ist ein Aktor integriert, um die Drehung motorisch zu steuern.

Das Kettenfahrwerk 11 der hier gezeigten Art weist zwei 2-strängige Kettenlaufwagen 11 auf, die jeweils zwei Kettenstränge 11a aufweisen. Die beiden Kettenlaufwagen sind beidseits der Drehachse 14 angeordnet und sind jeweils am Träger 12 um eine Achse 15 parallel zur Fahrtrichtung, also der Umlaufrichtung der Ketten, bzw. der Richtung in der die Umlenkräder beabstandet sind, drehbar gelagert. Hierdurch können sich die planen Unterseiten der Laufflächenelemente 16 der Kettenlaufwagen 11 bevorzugt tangential an die in Umfangsrichtung gekrümmte Oberfläche des Mastes anlegen. In den Achsen 15 können die beiden Kettenlaufwagen 11 lose, d.h. freilaufend aufgehängt sein. Die Figur 3 zeigt weiterhin, dass hier ein Kettenlaufwagen 11, in der Figur der rechte, zusätzlich, bevorzugt motorisch, drehbar um eine Achse 15' am Träger 12 befestigt ist, die senkrecht zur Achse 14 und senkrecht zur Achse 15 liegt. Hierdurch kann eine Verkippung der beiden Laufwagen 11 zueinander senkrecht zur Fahrtrichtung erfolgen. Bei dieser Ausführung sind somit alle genannten Achsen 14, 15 und 15'senkrecht zueinander.

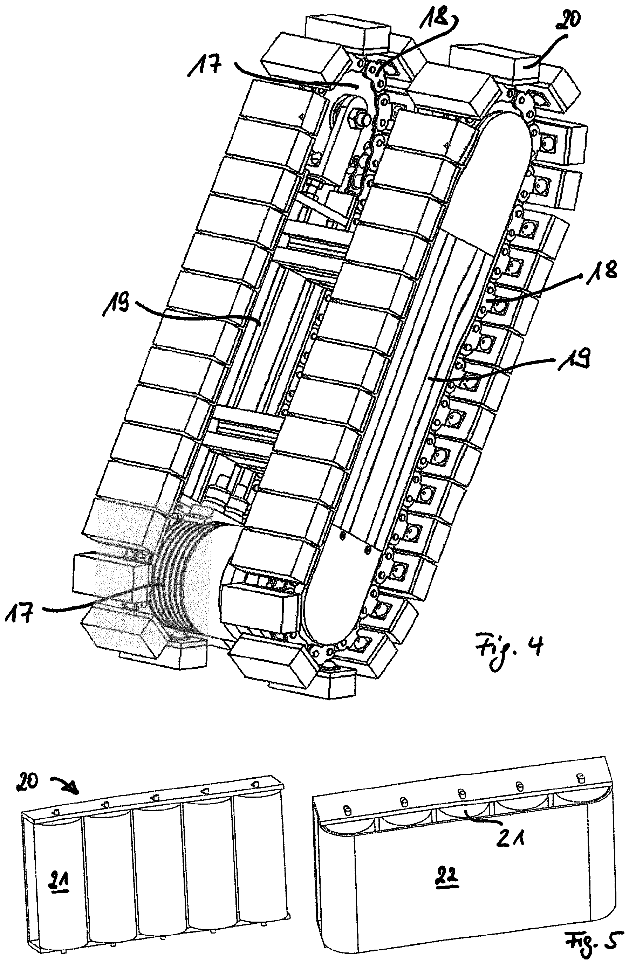

Die Figur 4 zeigt eine mögliche Ausführung eines 2-strängigen Kettenlaufwagens 11. In Fahrtrichtung beabstandet weist der Kettenlaufwagen Umlenkzahnräder 17 auf, um welche die Ketten herumgeführt sind. Zwischen den Umlenkzahnrädern sind die Kettenglieder 18 auf bzw. in Schienen 19 geführt.

Jedes Kettenglied 18 trägt außenseitig ein Laufflächenelement 20, dessen Lauffläche aus einem Elastomer ausgebildet ist. Diese Laufflächenelemente 20 können z.B. durch Verschraubung mit den Kettengliedern 18 austauschbar sein.

Figur 5 zeigt eine Ausbildung eines Laufflächenelementes 20, welches mehrere Rollen 21 aufweist, deren Drehachsen in Fahrtrichtung, also Laufrichtung der Ketten liegt. Hierdurch kann ein Kettenlaufwerk auch in Umfangsrichtung verfahren werden, z.B. dadurch, dass wenigstens eine der Rollen 21 angetrieben ist. Die Rollen können durch ein umlaufendes Band 22 überdeckt sein.

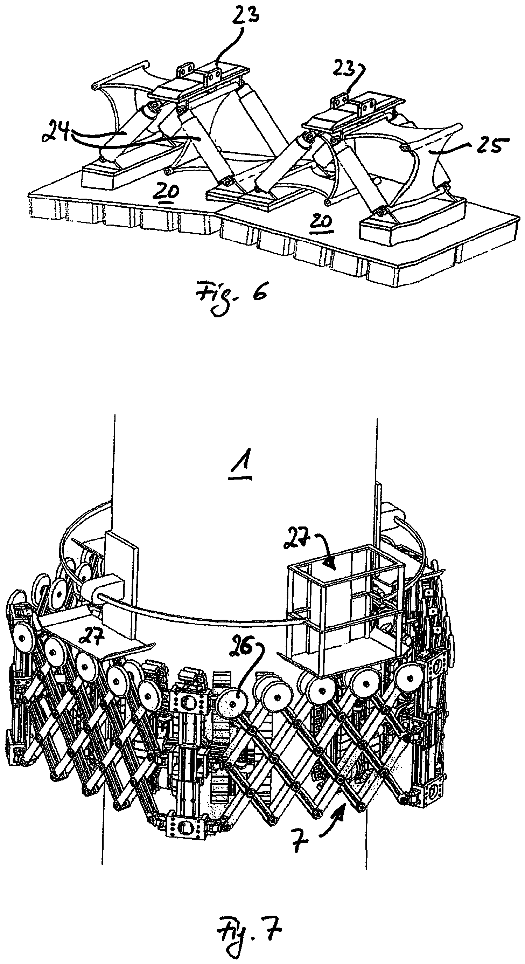

Figur 6 zeigt eine andere Ausführung, um eine Bewegbarkeit der Befahranlage in Umfangsrichtung zu realisieren. Die Laufflächenelemente 20 sind hier mit den nicht gezeigten Kettengliedern über Verbinder 23 verbunden, wobei sich zwischen den Verbindern und den Laufflächenelementen 20 eine Aktorik befindet, mit der die Laufflächenelemente relativ zu den Kettengliedern schreitend versetzt werden können.

Dafür sind zwei Paare von Linearaktoren 24 unter einem Winkel von 0 < Alpha < 180 Grad zwischen Verbinder 23 und Laufflächenelement 20 angeordnet. Durch Ein- und Ausfahren der Linearaktoren 24 kann ein Laufflächenelement 20 von der Oberfläche eines Mastes abgehoben, seitlich bewegt und wieder auf die Oberfläche abgesenkt werden. Dies kann während des Kettenumlaufes erfolgen. Durch eine zeitliche Nacheinanderansteuerung der Linearaktoren 24 verschiedener Laufflächenelemente 20 kann so eine in Umfangsrichtung des Mastes schreitende Bewegung erzeugt werden. Die Bewegungsbahn eines jeden Laufflächenelements ist hierbei durch die zwei Führungsgetriebe 25 zwangsgeführt, die in diesem Beispiel jeweils aus zwei aneinander und an Verbinder 23 sowie Laufflächenelement 20 befestigten Hebeln besteht.

Figur 7 zeigt eine Ausführung, bei welcher die Scherengetriebegitter der Spannsystemabschnitte 7 an den oberen gelenkig verbundenen Enden der jeweiligen Scherenhebel Rollen 26 tragen. Die Menge aller Rollen 26 bildet eine in Umfangsrichtung um den Mast 1 liegende Rollen-Lauffläche, auf welcher Wartungskabinen/Wartungseinheiten 27 um den Mast herumgeführt werden können.

## Patentansprüche

1. Befahranlage für zylindrische und/oder konische Oberflächen, insbesondere für die Außenfläche oder Innenfläche eines Rohres oder Mastes (1), umfassend:
a. eine Montagebühne (4a, 4b),
b. eine Vielzahl von verbundenen Fahrwerken (6), bevorzugt identischen Fahrwerken (6), die in einer Umfangsrichtung, insbesondere zusammen mit der zwischen zwei Fahrwerken (6) eingegliederten Montagebühne (4a, 4b), einen geschlossenen Ring ausbilden,
c. ein Spannsystem (7), das zumindest die Fahrwerke (6) untereinander verbindet und mit dem der Abstand zwischen den verbundenen Fahrwerken (6) änderbar ist,
d. wenigstens ein weiteres Fahrwerk (8), das an der Montagebühne (4a, 4b) in einem axialen Abstand zum Ring der verbundenen Fahrwerke (6) angeordnet ist
e. wobei zumindest die zum Ring verbundenen Fahrwerke (6), bevorzugt auch das dazu axial beabstandete Fahrwerk (8) jeweils als Kettenfahrwerk ausgebildet sind,
**dadurch gekennzeichnet, dass**
f. das Spannsystem in Umfangsrichtung in mehrere Spannsystemabschnitte (7) unterteilt ist und jeder Spannsystemabschnitt (7) zwei in Umfangsrichtung beabstandete Fahrwerke (6) verbindet und in der Umfangsrichtung mittels wenigstens eines Aktors längenänderbar ist und
g. ein jeder Spannsystemabschnitt (7) als Scherengelenkkette oder Scherengelenkgitter ausgebildet ist, insbesondere nach Art einer Nürnberger Schere, mit ein- und/oder mehrfach gekreuzten Scherenhebeln (7a), die im Kreuzungsbereich (7b) gelenkig verbunden sind.

2. Befahranlage nach Anspruch 1, **dadurch gekennzeichnet, dass** ein jeder Spannsystemabschnitt (7) in radialer Richtung wenigstens zwei beabstandet nebeneinander liegende Scherengelenkketten oder Scherengelenkgitter aufweist.

3. Befahranlage nach einem der vorherigen Ansprüche, **dadurch gekennzeichnet, dass** ein jeder Spannsystemabschnitt (7) an seinen in Umfangsrichtung liegenden Enden Verbinder (10), insbesondere axial beabstandete Verbinder (10) aufweist, an welche jeweils ein Trägerelement (9) eines jeweiligen Fahrwerkes (6) in zwei verschiedenen um 180 Grad rotierte axial ausgerichtete Orientierungen montierbar ist, insbesondere in einer ersten Orientierung, in welcher ein jeweiliges Fahrwerk (6) bezogen auf das Spannsystem (7) radial nach innen steht und eine zweite Orientierung in welcher ein jeweiliges Fahrwerk (6) bezogen auf das Spannsystem (7) radial nach außen steht.

4. Befahranlage nach einem der vorherigen Ansprüche, **dadurch gekennzeichnet, dass** ein Kettenfahrwerk (6), insbesondere jedes Kettenfahrwerk (6) wenigstens einen Kettenlaufwagen (11) umfasst, insbesondere jeweils ein Paar von 2-strängigen Kettenlaufwagen (11) umfasst.

5. Befahranlage nach Anspruch 4, **dadurch gekennzeichnet, dass** das jeweilige Fahrwerk (6) ein mit Spannsystemabschnitten (7) verbindbares Trägerelement (9) aufweist und der wenigstens eine Kettenlaufwagen (11) um einen radiale, bevorzugt antreibbare Drehachse (14) beweglich am Trägerelement (9) befestigt ist, insbesondere ein Paar von 2-strängigen Kettenlaufwagen (11) beidseits der radialen, bevorzugt antreibbaren Drehachse (14) angeordnet und über diese gemeinsam am Trägerelement (9) befestigt ist.

6. Befahranlage nach Anspruch 4 oder 5, **dadurch gekennzeichnet, dass** jeder 2-strängige Kettenlaufwagen (11) um eine eigene in Laufrichtung liegende, bevorzugt antreibbare Achse (15), insbesondere die zwischen den zwei Kettensträngen (11a) angeordnet ist, senkrecht zur radialen Drehachse (15) verschwenkbar ist, insbesondere wobei die beiden Achsen (15) parallel liegen.

7. Befahranlage nach einem der vorherigen Ansprüche 5 oder 6, **dadurch gekennzeichnet, dass** wenigstens einer der beiden 2-strängigen Kettenlaufwagen (11) um eine Achse (15') senkrecht zur Laufrichtung und senkrecht zur radialen Drehachse (14) drehbar an einem Träger (12) gelagert ist, insbesondere an welchem auch der andere 2-strängige Kettenlaufwagen (11) befestigt ist, insbesondere nicht um dieselbe Achse (15') drehbar ist..

8. Befahranlage nach einem der vorherigen Ansprüche 4 bis 7, **dadurch gekennzeichnet, dass** die Kettenglieder (18) jedes Kettenlaufwagens (11) auswechselbare Laufflächenelemente (20) aufweisen.

9. Befahranlage nach einem der vorherigen Ansprüche 4 bis 8, **dadurch gekennzeichnet, dass** die Kettenglieder (18) jedes Kettenlaufwagens (11) Laufflächenelemente (20) aufweisen, welche mit einer Oberfläche
a. reibschlüssig zusammenwirken, insbesondere durch Ausbildung einer jeweiligen Lauffläche aus einem Elastomer oder
b. formschlüssig zusammenwirken, insbesondere durch Ausbildung einer jeweiligen Lauffläche mir einer Oberflächenstrukturierung korrespondierend zu einer Oberflächenstrukturierung an der entlangzufahrenden Oberfläche.

10. Befahranlage nach einem der vorherigen Ansprüche 4 bis 9, **dadurch gekennzeichnet, dass** die Kettenglieder (18) jedes Kettenlaufwagens (11) Laufflächenelemente (20) aufweisen, welche Rollen (21) umfassen, insbesondere von denen wenigstens eine antreibbar und/oder bremsbar ist, deren Rotationsachsen in Fahrtrichtung des Kettenlaufwagen (11) ausgerichtet sind.

11. Befahranlage nach einem der vorherigen Ansprüche 4 bis 10, **dadurch gekennzeichnet, dass** die Kettenglieder (18) jedes Kettenlaufwagens (11) Laufflächenelemente (20) aufweisen, welche relativ zum jeweilige Kettenglied (18) versetzbar sind.

12. Befahranlage nach Anspruch 11, **dadurch gekennzeichnet, dass** ein Versetzen durchführbar ist mittels ansteuerbaren Linearantrieben (24), die sich zwischen Kettenglied (18) und Laufflächenelement (20) erstecken.

13. Befahranlage nach einem der vorherigen Ansprüche 1 bis 3, **dadurch gekennzeichnet, dass** ein jeder als Scherengelenkkette oder Scherengelenkgitter ausgebildeter Spannsystemabschnitt (7) bezogen auf eine Montage an einem vertikalen Mast/Rohr (1) an den obenliegenden Gelenkachsen der Scherenhebel (7a) Rollen (26) aufweist auf denen eine Arbeitsbühne (27) oder Wartungseinheit, insbesondere mit planer Unterfläche, in Umfangsrichtung um den Mast / das Rohr (1) herumrollbar ist.

## Claims

1. Travel system for travelling on cylindrical and/or conical surfaces, in particular on the outer surface or inner surface of a pipe or mast (1), comprising:
a. an assembly platform (4a, 4b),
b. a plurality of connected travel units (6), preferably identical travel units (6), which, in particular together with the assembly platform (4a, 4b) integrated between two travel units (6), form a closed ring in a circumferential direction,
c. a bracing system (7) which at least interconnects the travel units (6) and by means of which the spacing between the connected travel units (6) can be changed,
d. at least one further travel unit (8) which is arranged on the assembly platform (4a, 4b) at an axial distance from the ring of the connected travel units (6),
e. wherein at least the travel units (6) connected to form the ring, preferably also the travel unit (8) axially spaced apart therefrom, are each designed as track-type travel units,
**characterized in that**
f. the bracing system is subdivided into a plurality of bracing system portions (7) in the circumferential direction, and each bracing system portion (7) connects two travel units (6) spaced apart in the circumferential direction and can be adjusted in length in the circumferential direction by means of at least one actuator, and
g. each bracing system portion (7) is designed as a scissors joint chain or scissors joint lattice, in particular in the manner of a lazy tongs, having scissor levers (7a) which are crossed one and/or more times and which are articulately connected in the crossing region (7b).

2. Travel system according to Claim 1, **characterized in that** each bracing system portion (7) has, in the radial direction, at least two scissors joint chains or scissors joint lattices situated next to one another at a distance apart.

3. Travel system according to one of the preceding claims, **characterized in that** each bracing system portion (7) has, at its ends situated in the circumferential direction, connectors (10), in particular axially spaced-apart connectors (10), on each of which a support element (9) of a respective travel unit (6) can be mounted in two different axially oriented orientations rotated about 180 degrees, in particular in a first orientation in which a respective travel unit (6) is situated radially inwards with respect to the bracing system (7), and a second orientation in which a respective travel unit (6) is situated radially outwards with respect to the bracing system (7).

4. Travel system according to one of the preceding claims, **characterized in that** a track-type travel unit (6), in particular each track-type travel unit (6), comprises at least one track-type running carriage (11), in particular comprises in each case a pair of 2-strand track-type running carriages (11) .

5. Travel system according to Claim 4, **characterized in that** the respective travel unit (6) has a support element (9) which can be connected to bracing system portions (7), and the at least one track-type running carriage (11) is fastened on the support element (9) so as to be movable about a radial, preferably driveable rotation axis (14), with, in particular, a pair of 2-strand track-type running carriages (11) being arranged on both sides of the radial, preferably driveable, rotation axis (14) and being fastened jointly via the latter on the support element (9).

6. Travel system according to Claim 4 or 5, **characterized in that** each 2-strand track-type running carriage (11) is pivotable perpendicularly to the radial rotation axis (15) about a dedicated, preferably driveable, axis (15) situated in the running direction, with, in particular, said axis being arranged between the two track strands (11a), in particular wherein the two axes (15) are situated in parallel.

7. Travel system according to either of the preceding Claims 5 and 6, **characterized in that** at least one of the two 2-strand track-type running carriages (11) is mounted on a support (12) so as to be rotatable about an axis (15') perpendicular to the running direction and perpendicular to the radial rotation axis (14), in particular on which support the other 2-strand track-type running carriage (11) is also fastened, in particular not being rotatable about the same axis (15').

8. Travel system according to one of the preceding Claims 4 to 7, **characterized in that** the chain links (18) of each track-type running carriage (11) have interchangeable tread elements (20).

9. Travel system according to one of the preceding Claims 4 to 8, **characterized in that** the chain links (18) of each track-type running carriage (11) have tread elements (20) which
a. interact frictionally with a surface, in particular by forming a respective tread from an elastomer, or
b. interact positively with a surface, in particular by forming a respective tread with a surface structuring corresponding to a surface structuring on the surface to be moved along.

10. Travel system according to one of the preceding Claims 4 to 9, **characterized in that** the chain links (18) of each track-type running carriage (11) have tread elements (20) which comprise rollers (21), in particular of which at least one is driveable and/or brakable, the rotation axes of which are oriented in the direction of travel of the track-type running carriage (11).

11. Travel system according to one of the preceding Claims 4 to 10, **characterized in that** the chain links (18) of each track-type running carriage (11) have tread elements (20) which are displaceable relative to respective chain link (18).

12. Travel system according to Claim 11, **characterized in that** a displacement can be carried out by means of controllable linear drives (24) which extend between chain link (18) and tread element (20).

13. Travel system according to one of the preceding Claims 1 to 3, **characterized in that,** with respect to a mounting on a vertical mast/pipe (1), each bracing system portion (7) designed as a scissors joint chain or scissors joint lattice has, on the upper joint axes of the scissor levers (7a), rollers (26) on which a work platform (27) or maintenance unit, in particular with a planar lower surface, can be rolled around the mast/pipe (1) in the circumferential direction.

## Revendications

1. Système de déplacement sur des surfaces cylindriques et/ou coniques, en particulier sur la face extérieure ou la face intérieure d'un tube ou d'un mât (1) comprenant:
a. une plate-forme de montage (4a, 4b),
b. une multiplicité de dispositifs de déplacement (6), de préférence de dispositifs de déplacement identiques (6), qui forment un anneau fermé dans une direction périphérique, en particulier avec la plate-forme de montage (4a, 4b) insérée entre deux dispositifs de déplacement (6),
c. un système de serrage (7), qui relie au moins les dispositifs de déplacement (6) les uns aux autres et avec lequel la distance entre les dispositifs de déplacement reliés (6) peut être modifiée,
d. au moins un autre dispositif de déplacement (8), qui est disposé à la plate-forme de montage (4a, 4b) à une distance axiale de l'anneau des dispositifs de déplacement reliés (6),
e. dans lequel au moins les dispositifs de déplacement (6) reliés en anneau, de préférence aussi le dispositif de déplacement (8) axialement espacé de ceux-ci, sont constitués respectivement par un dispositif de déplacement à chaînes,
**caractérisé en ce que**
f. le système de serrage est divisé dans la direction périphérique en plusieurs parties de système de serrage (7) et chaque partie de système de serrage (7) relie deux dispositifs de déplacement (6) espacés en direction périphérique et est de longueur variable en direction périphérique au moyen d'au moins un actionneur, et
g. chaque partie de système de serrage (7) est formée par une chaîne articulée en ciseaux, en particulier à la manière de ciseaux de Nuremberg, avec des lames de ciseaux (7a) croisées une fois et/ou plusieurs fois, qui sont assemblées de façon articulée dans la région de croisement (7b).

2. Système de déplacement selon la revendication 1, **caractérisé en ce que** chaque partie de système de serrage (7) présente en direction radiale au moins deux chaînes articulées en ciseaux ou deux grilles articulées en ciseaux situées à distance l'une à côté de l'autre.

3. Système de déplacement selon l'une quelconque des revendications précédentes, **caractérisé en ce que** chaque partie de système de serrage (7) présente à ses extrémités situées en direction périphérique des connecteurs (10), en particulier des connecteurs axialement espacés (10), sur lesquels un élément de support (9) d'un dispositif de déplacement respectif (6) peut être respectivement monté dans deux orientations différentes orientées axialement tournées de 180°, en particulier dans une première orientation, dans laquelle un dispositif de déplacement respectif (6) se trouve radialement à l'intérieur par rapport au système de serrage (7) et une deuxième orientation dans laquelle un dispositif de déplacement respectif (6) se trouve radialement à l'extérieur par rapport au système de serrage (7).

4. Système de déplacement selon l'une quelconque des revendications précédentes, **caractérisé en ce qu'**un dispositif de déplacement à chaînes (6), en particulier chaque dispositif de déplacement à chaînes (6), comprend au moins un chariot à chaînes (11), en particulier respectivement une paire de chariots à chaînes (11) à deux lignes.

5. Système de déplacement selon la revendication 4, **caractérisé en ce que** le dispositif de déplacement respectif (6) présente un élément de support (9) pouvant être assemblé à des parties de système de serrage (7) et ledit au moins un chariot à chaînes (11) est fixé à l'élément de support (9) de façon mobile autour d'un axe de rotation radial (14), pouvant de préférence être entraîné, en particulier une paire de chariots à chaînes à deux lignes (11) sont disposés de part et d'autre de l'axe de rotation radial (14), pouvant de préférence être entraîné, et sont fixés par celui-ci en commun à l'élément de support (9).

6. Système de déplacement selon une revendication 4 ou 5, **caractérisé en ce que** chaque chariot à chaînes à deux lignes (11) peut pivoter autour de son propre axe (15) situé dans la direction de déplacement, pouvant de préférence être entraîné, en particulier qui est disposé entre les deux lignes de chaînes (11a), perpendiculairement à l'axe de rotation radial (15), en particulier dans lequel les deux axes (15) sont parallèles.

7. Système de déplacement selon l'une quelconque des revendications précédentes 5 ou 6, **caractérisé en ce qu'**au moins un des deux chariots à chaînes à deux lignes (11) est monté sur un support (12) de façon rotative autour d'un axe (15') perpendiculaire à la direction de déplacement et perpendiculaire à l'axe de rotation radial (14), en particulier sur lequel l'autre chariot à chaînes à deux lignes (11) est également fixé, en particulier ne peut pas tourner autour du même axe (15').

8. Système de déplacement selon l'une quelconque des revendications précédentes 4 à 7, **caractérisé en ce que** les maillons de chaîne (18) de chaque chariot à chaînes (11) présentent des éléments de surface de déplacement remplaçables (20).

9. Système de déplacement selon l'une quelconque des revendications précédentes 4 à 8, **caractérisé en ce que** les maillons de chaîne (18) de chaque chariot à chaînes (11) présentent des éléments de surface de déplacement (20), qui
a. coopèrent par friction, en particulier en formant une surface de déplacement respective en un élastomère ou
b. coopèrent par emboîtement, en particulier en formant une surface de déplacement respective avec une structuration de surface correspondant à une structuration de surface sur la surface à parcourir.

10. Système de déplacement selon l'une quelconque des revendications précédentes 4 à 9, **caractérisé en ce que** les maillons de chaîne (18) de chaque chariot à chaînes (11) présentent des éléments de surface de déplacement (20), qui comprennent des rouleaux (21), en particulier parmi lesquels au moins un peut être entraîné et/ou freiné, dont les axes de rotation sont orientés dans la direction de déplacement du chariot à chaînes (11).

11. Système de déplacement selon l'une quelconque des revendications précédentes 4 à 10, **caractérisé en ce que** les maillons de chaîne (18) de chaque chariot à chaînes (11) présentent des éléments de surface de déplacement (20), qui peuvent être décalés par rapport au maillon de chaîne respectif (18).

12. Système de déplacement selon la revendication 11, **caractérisé en ce qu'**un décalage peut être effectué au moyen d'entraînements linéaires pouvant être commandés (24), qui s'étendent entre le maillon de chaîne (18) et l'élément de surface de déplacement (20).

13. Système de déplacement selon l'une quelconque des revendications précédentes 1 à 3, **caractérisé en ce que** chaque partie de système de serrage (7) réalisée sous forme de chaîne articulée à ciseaux ou de grille articulée à ciseaux présente, par rapport à un montage sur un mât/tube vertical (1), sur les axes d'articulation supérieurs des lames de ciseaux (7a), des rouleaux (26), sur lesquels une plate-forme de travail (27) ou une unité d'entretien, en particulier avec une surface inférieure plane, peut tourner en direction périphérique autour du mât/tube (1).
